# EUROPEAN PATENT APPLICATION

(11) **EP 4 797 796 A1**
(43) Date of publication of application: **26.08.2026**
(21) Application number: 24884669.3
(22) Date of filing: 28.10.2024
(51) Int. Cl.: H04W 36/08

(54) **COMMUNICATION METHOD, SYNCHRONIZATION METHOD AND COMMUNICATION APPARATUS**

(30) Priority: 03.11.2023 CN 202311465735
(71) Applicant: Huawei Technologies Co., Ltd., Shenzhen, Guangdong 518129 (CN)
(72) Inventor: LU, Rui, Shenzhen, Guangdong 518129 (CN); HU, Xingxing, Shenzhen, Guangdong 518129 (CN)
(74) Representative: Pfenning, Meinig & Partner mbB
(86) International application number: PCT/CN2024/127798
(87) International publication number: WO 2025/092666

(57) **Abstract**

This application provides a communication method, a synchronization method, and a communication apparatus. The communication method includes: A terminal receives first information, where the first information indicates the terminal to hand over to a first cell, and the first information includes a plurality of sets of ephemeris-related information corresponding to the first cell; the terminal determines to hand over to the first cell and change to first ephemeris-related information corresponding to the first cell, where the first ephemeris-related information is one of the plurality of sets of ephemeris-related information; and the terminal accesses the first cell based on the first ephemeris-related information. According to the communication method provided in this application, the terminal can enable ephemeris-related information of a corresponding satellite in a time period with satellite coverage, to perform conditional handover, thereby effectively reducing signaling overheads.

## Description

This application claims priority to Chinese Patent Application No. 202311465735.7, filed with the China National Intellectual Property Administration on November 3, 2023, and entitled "COMMUNICATION METHOD, SYNCHRONIZATION METHOD, AND COMMUNICATION APPARATUS", which is incorporated herein by reference in its entirety.

### TECHNICAL FIELD

This application relates to the field of communication technologies, and more specifically, to a communication method, a synchronization method, and a communication apparatus.

### BACKGROUND

In a non-terrestrial network (NTN) system, a satellite network may provide coverage for an area that is difficult to be covered by a terrestrial network, and may also enhance reliability of mobile communication. A cell coverage area of a satellite is very large. For example, in an earth fixed cell scenario, the satellite may adjust its beam, so that an area range covered by the beam remains unchanged within a period of time. Then, when the satellite cannnot provide a service, a next satellite provides coverage. In this scenario, a ground base station remains unchanged, and only a serving satellite changes. After a new satellite arrives, a terminal only needs to re-perform downlink synchronization and uplink synchronization with the new satellite. In this process, the base station does not need to send an L3 handover command, so that signaling overheads can be reduced.

However, due to mobility of the terminal, the terminal at an edge of cell coverage may move out of a coverage range. Alternatively, because coverage ranges of new and old satellites are different, and the coverage range of the new satellite is smaller than that of the current serving satellite, the terminal at an edge of a cell may not be within the coverage range of the new satellite. To improve handover robustness, a network needs to configure conditional handover configuration information for the terminal, so that the terminal can hand over from a current cell to a target cell. However, a satellite change of a candidate target cell may cause a need to update the conditional handover configuration information, and a network side needs to continuously update the conditional handover configuration information, resulting in high signaling overheads. Therefore, how to reduce overheads of a conditional handover configuration becomes an urgent problem to be resolved currently.

### SUMMARY

This application provides a communication method, a synchronization method, and a communication apparatus, to reduce signaling overheads of a terminal when the terminal performs conditional handover.

According to a first aspect, a communication method is provided. The method includes: A terminal receives first information, where the first information indicates the terminal to hand over to a first cell, and the first information includes a plurality of sets of ephemeris-related information corresponding to the first cell; the terminal determines to hand over to the first cell and change to first ephemeris-related information corresponding to the first cell, where the first ephemeris-related information is one of the plurality of sets of ephemeris-related information; and the terminal accesses the first cell based on the first ephemeris-related information.

In this embodiment of this application, CHO configuration information carries same handover configuration information and ephemeris-related information of a plurality of satellites, so that when a satellite of a target cell that the terminal is to access changes, a source base station does not need to send changed CHO configuration information to the terminal, and the terminal only needs to enable ephemeris-related information of a corresponding satellite in a time period with satellite coverage, to perform conditional handover, thereby effectively reducing signaling overheads.

With reference to the first aspect, in some implementations of the first aspect, the first information further includes enabling time respectively corresponding to the plurality of sets of ephemeris-related information; and that the terminal determines the first ephemeris-related information corresponding to the first cell includes: First enabling time corresponding to the first ephemeris-related information is equal to or later than time at which the terminal determines to hand over to the first cell.

In this embodiment of this application, different ephemeris-related information is enabled at different moments based on the enabling time corresponding to the ephemeris-related information carried in the CHO configuration information, thereby effectively reducing signaling overheads.

With reference to the first aspect, in some implementations of the first aspect, the first information further includes a plurality of physical cell identifiers, and the physical cell identifiers are in one-to-one correspondence with the ephemeris-related information; and the terminal determines a first physical cell identifier corresponding to the first cell.

With reference to the first aspect, in some implementations of the first aspect, the first information is conditional handover configuration information of the first cell, and the conditional handover configuration information includes an execution condition under which the terminal hands over to the first cell.

With reference to the first aspect, in some implementations of the first aspect, when the execution condition of the first cell is met, the terminal skips accessing the first cell.

According to the communication method provided in this embodiment of this application, on a basis that the conditional handover execution condition is met, whether the terminal performs conditional handover on the target cell is further decided, so that a problem, for example, a communication problem, caused by insufficient time or excessively long waiting time of the terminal accessing the target cell, can be alleviated, terminal handover efficiency can be improved, and service interruption time can be shortened.

With reference to the first aspect, in some implementations of the first aspect, the first information further includes first service stop time corresponding to the first ephemeris-related information; and
when the execution condition is met and a time interval between a current moment and the first service stop time is less than a first threshold, the terminal skips accessing the first cell; or
when the execution condition is met and a time interval between a current moment and the first service stop time is greater than or equal to a first threshold, the terminal accesses the first cell.

With reference to the first aspect, in some implementations of the first aspect, the first information further includes second service stop time of ephemeris-related information of the terminal in a current cell; and when the execution condition is met and a time interval between a current moment and the second service stop time exceeds a second threshold, the terminal skips accessing the first cell; or when the execution condition is met and a time interval between a current moment and the second service stop time is less than or equal to a second threshold, the terminal accesses the first cell.

With reference to the first aspect, in some implementations of the first aspect, the first information further includes second service stop time of ephemeris-related information of the terminal in a current cell; and when the execution condition is met and an interval between the second service stop time and the first enabling time exceeds a third threshold, the terminal skips accessing the first cell; or when the execution condition is met and an interval between the second service stop time and the first enabling time is less than or equal to a third threshold, the terminal accesses the first cell.

With reference to the first aspect, in some implementations of the first aspect, when the execution condition is met and an interval between a current moment and the first enabling time exceeds a fourth threshold, the terminal skips accessing the first cell; or when the execution condition is met and an interval between a current moment and the first enabling time is less than or equal to a fourth threshold, the terminal accesses the first cell.

According to the communication method provided in this embodiment of this application, on a basis that the conditional handover execution condition is met, whether the terminal performs conditional handover on the target cell is further decided, so that a problem, for example, a communication problem, caused by insufficient time or excessively long waiting time of the terminal accessing the target cell, can be alleviated, terminal handover efficiency can be improved, and service interruption time can be shortened.

With reference to the first aspect, in some implementations of the first aspect, the terminal starts decision of the execution condition after the first enabling time.

According to a second aspect, a communication method is provided. The method includes: A terminal receives first information, where the first information indicates the terminal to hand over to a first cell, the first information includes an execution condition under which the terminal hands over to the first cell, and the first information further includes first ephemeris-related information corresponding to the first cell; and the terminal determines that the execution condition is met, and the terminal determines, based on the first information, whether to access the first cell.

According to the communication method provided in this embodiment of this application, on a basis that the conditional handover execution condition is met, whether the terminal performs conditional handover on a target cell is further decided, so that a problem, for example, a communication problem, caused by insufficient time or excessively long waiting time of the terminal accessing the target cell, can be alleviated, terminal handover efficiency can be improved, and service interruption time can be shortened.

With reference to the second aspect, in some implementations of the second aspect, the first information further includes first service stop time corresponding to the first ephemeris-related information; and when a time interval between a current moment and the first service stop time is less than a first threshold, the terminal skips accessing the first cell; or when a time interval between a current moment and the first service stop time is greater than or equal to a first threshold, the terminal accesses the first cell.

With reference to the second aspect, in some implementations of the second aspect, the first information further includes second service stop time of ephemeris-related information of the terminal in a current cell; and when a time interval between a current moment and the second service stop time exceeds a second threshold, the terminal skips accessing the first cell; or when a time interval between a current moment and the second service stop time is less than or equal to a second threshold, the terminal accesses the first cell.

With reference to the second aspect, in some implementations of the second aspect, the first information further includes first enabling time corresponding to the first ephemeris-related information and second service stop time of ephemeris-related information of the terminal in a current cell; and when an interval between the second service stop time and the first enabling time exceeds a third threshold, the terminal skips accessing the first cell; or when an interval between the second service stop time and the first enabling time is less than or equal to a third threshold, the terminal accesses the first cell.

With reference to the second aspect, in some implementations of the second aspect, the first information further includes first enabling time corresponding to the first ephemeris-related information; and when an interval between a current moment and the first enabling time exceeds a fourth threshold, the terminal skips accessing the first cell; or when an interval between a current moment and the first enabling time is less than or equal to a fourth threshold, the terminal accesses the first cell.

According to a third aspect, a synchronization method is provided. The method includes: A target base station sends second information, where the second information identifies that first information or a resource configured for a terminal changes; the target base station receives handover request information, where the handover request information indicates the target base station to reconfigure the first information; and the target base station sends reconfigured first information, where the reconfigured first information includes first ephemeris-related information corresponding to a first cell and includes effective time, and the reconfigured first information indicates the terminal to hand over to the first cell and enable the first ephemeris-related information at the effective time.

In this embodiment of this application, the target base station triggers a change of CHO configuration information, to generate CHO reconfiguration information. The CHO reconfiguration information includes ephemeris-related information of a changed satellite and includes corresponding effective time, so that the terminal using the CHO reconfiguration information synchronizes with the changed satellite covering a candidate target cell, thereby effectively improving handover efficiency.

With reference to the third aspect, in some implementations of the third aspect, the second information includes a cause value.

According to a fourth aspect, a synchronization method is provided. The method includes: A source base station sends handover request information, where the handover request information indicates a target base station to reconfigure first information, and reconfigured first information includes first ephemeris-related information corresponding to a first cell and includes effective time; and the source base station receives the reconfigured first information sent by the target base station, where the reconfigured first information indicates a terminal to hand over to the first cell and enable the first ephemeris-related information at the effective time.

In this embodiment of this application, the source base station triggers a change of CHO configuration information, to indicate the target base station to generate CHO reconfiguration information. The CHO reconfiguration information includes ephemeris-related information of a changed satellite and includes corresponding effective time, so that the terminal using the CHO reconfiguration information synchronizes with the changed satellite covering a candidate target cell, thereby effectively improving handover efficiency.

With reference to the fourth aspect, in some implementations of the fourth aspect, the handover request information includes a conditional handover trigger value, and the conditional handover trigger value is used for triggering the first information or a resource configured by the terminal to change.

According to a fifth aspect, a synchronization method is provided. The method includes: A terminal receives reconfigured first information, where the reconfigured first information includes first ephemeris-related information corresponding to a first cell and includes effective time; and based on the reconfigured first information, the terminal hands over to the first cell, and enables the first ephemeris-related information at the effective time.

According to a sixth aspect, a communication apparatus is provided. The apparatus includes: a communication unit, configured to receive first information, where the first information indicates a terminal to hand over to a first cell, and the first information includes a plurality of sets of ephemeris-related information corresponding to the first cell; and a processing unit, configured to determine to hand over to the first cell and change to first ephemeris-related information corresponding to the first cell, where the first ephemeris-related information is one of the plurality of sets of ephemeris-related information. The processing unit is further configured to access the first cell based on the first ephemeris-related information.

With reference to the sixth aspect, in some implementations of the sixth aspect, the first information further includes enabling time respectively corresponding to the plurality of sets of ephemeris-related information; and that the processing unit determines the first ephemeris-related information corresponding to the first cell includes: First enabling time corresponding to the first ephemeris-related information is equal to or less than time at which the processing unit determines to hand over to the first cell.

With reference to the sixth aspect, in some implementations of the sixth aspect, the first information further includes a plurality of physical cell identifiers, and the physical cell identifiers are in one-to-one correspondence with the ephemeris-related information; and the processing unit is further configured to determine a first physical cell identifier corresponding to the first cell.

With reference to the sixth aspect, in some implementations of the sixth aspect, the first information is conditional handover configuration information of the first cell, and the conditional handover configuration information includes an execution condition under which the terminal hands over to the first cell.

With reference to the sixth aspect, in some implementations of the sixth aspect, when the execution condition of the first cell is met, the terminal skips accessing the first cell.

With reference to the sixth aspect, in some implementations of the sixth aspect, the first information further includes first service stop time corresponding to the first ephemeris-related information; and when the execution condition is met and a time interval between a current moment and the first service stop time exceeds a first threshold, the terminal skips accessing the first cell; or when the execution condition is met and a time interval between a current moment and the first service stop time is less than or equal to a first threshold, the terminal accesses the first cell.

With reference to the sixth aspect, in some implementations of the sixth aspect, the first information further includes first service stop time corresponding to the first ephemeris-related information; and when the execution condition is met and an interval between the first service stop time and the first enabling time exceeds a second threshold, the terminal skips accessing the first cell; or when the execution condition is met and an interval between the first service stop time and the first enabling time is less than or equal to a second threshold, the terminal accesses the first cell.

With reference to the sixth aspect, in some implementations of the sixth aspect, when the execution condition is met and an interval between a current moment and the first enabling time exceeds a third threshold, the terminal skips accessing the first cell; or when the execution condition is met and an interval between a current moment and the first enabling time is less than or equal to a third threshold, the terminal accesses the first cell.

With reference to the sixth aspect, in some implementations of the sixth aspect, the processing unit is further configured to start decision of the execution condition after the first enabling time.

According to a seventh aspect, a communication apparatus is provided. The apparatus includes: a communication unit, configured to receive first information, where the first information indicates a terminal to hand over to a first cell, and the first information includes an execution condition under which the terminal hands over to the first cell; and a processing unit, configured to determine that when the execution condition is met, the terminal determines, based on the first information, to skip accessing the first cell.

With reference to the seventh aspect, in some implementations of the seventh aspect, the first information further includes first ephemeris-related information corresponding to the first cell and first service stop time corresponding to the first ephemeris-related information. When a time interval between a current moment and the first service stop time exceeds a first threshold, the terminal skips accessing the first cell.

With reference to the seventh aspect, in some implementations of the seventh aspect, the first information further includes first ephemeris-related information corresponding to the first cell and first enabling time and first service stop time corresponding to the first ephemeris-related information. When an interval between the first service stop time and the first enabling time exceeds a second threshold, the terminal skips accessing the first cell.

With reference to the seventh aspect, in some implementations of the seventh aspect, the first information further includes first ephemeris-related information corresponding to the first cell and first enabling time corresponding to the first ephemeris-related information. When an interval between a current moment and the first enabling time exceeds a third threshold, the terminal skips accessing the first cell.

According to an eighth aspect, a communication apparatus is provided. The apparatus includes: a communication unit, configured to send second information, where the second information identifies that first information or a resource configured for a terminal changes, where the communication unit is further configured to receive handover request information, where the handover request information indicates a target base station to reconfigure the first information; and the communication unit is further configured to send reconfigured first information, where the reconfigured first information includes first ephemeris-related information corresponding to a first cell and includes effective time; and a processing unit, configured to indicate the terminal to hand over to the first cell and enable the first ephemeris-related information at the effective time.

With reference to the eighth aspect, in some implementations of the eighth aspect, the second information includes a cause value.

According to a ninth aspect, a communication apparatus is provided. The apparatus includes: a communication unit, configured to send handover request information, where the handover request information indicates a target base station to reconfigure first information, and reconfigured first information includes first ephemeris-related information corresponding to a first cell and includes effective time, where the communication unit is further configured to receive the reconfigured first information sent by the target base station; and a processing unit, configured to indicate a terminal to hand over to the first cell and enable the first ephemeris-related information at the effective time.

With reference to the ninth aspect, in some implementations of the ninth aspect, the handover request information includes a conditional handover trigger value, and the conditional handover trigger value is used for triggering the first information or a resource configured by the terminal to change.

According to a tenth aspect, a communication apparatus is provided. The apparatus includes: a communication unit, configured to receive reconfigured first information, where the reconfigured first information includes first ephemeris-related information corresponding to a first cell and includes effective time; and a processing unit, configured to: based on the reconfigured first information, hand over to the first cell and enable the first ephemeris-related information at the effective time.

According to an eleventh aspect, a computer-readable storage medium is provided. The computer-readable storage medium stores a computer program. When the computer program is run on a computer, the computer is caused to perform the method according to any one of the first aspect and the possible implementations of the first aspect, or the computer is caused to perform the method according to any one of the second aspect and the possible implementations of the second aspect.

According to a twelfth aspect, a computer-readable storage medium is provided. The computer-readable storage medium stores a computer program. When the computer program is run on a computer, the computer is caused to perform the method according to any one of the third aspect and the possible implementations of the third aspect, or the computer is caused to perform the method according to any one of the fourth aspect and the possible implementations of the fourth aspect, or the computer is caused to perform the method according to the fifth aspect.

According to a thirteenth aspect, a computer program product is provided. The computer program product includes instructions used for performing the method according to any one of the first aspect and the possible implementations of the first aspect, or computer program product includes instructions used for performing the method according to any one of the second aspect and the possible implementations of the second aspect.

According to a fourteenth aspect, a computer program product is provided. The computer program product includes instructions used for performing the method according to any one of the third aspect and the possible implementations of the third aspect, or computer program product includes instructions used for performing the method according to any one of the fourth aspect and the possible implementations of the fourth aspect, or computer program product includes instructions used for performing the method according to the fifth aspect.

### BRIEF DESCRIPTION OF DRAWINGS

FIG. 1 is a diagram of a communication method according to an embodiment of this application;
FIG. 2 is a diagram of a communication method according to an embodiment of this application;
FIG. 3 is a diagram of a communication method according to an embodiment of this application;
FIG. 4 is a diagram of a communication method according to an embodiment of this application;
FIG. 5 is a diagram of a communication method according to an embodiment of this application;
FIG. 6 is a diagram of a communication method according to an embodiment of this application;
FIG. 7 is a diagram of a synchronization method according to an embodiment of this application;
FIG. 8 is a diagram of a synchronization method according to an embodiment of this application;
FIG. 9 is a diagram of a communication apparatus according to an embodiment of this application; and
FIG. 10 is a diagram of a communication apparatus according to an embodiment of this application.

### DESCRIPTION OF EMBODIMENTS

The following describes technical solutions of this application with reference to accompanying drawings.

In a non-terrestrial network (non-terrestrial network, NTN), communication implemented by using a non-terrestrial network device is referred to as non-terrestrial communication. An NTN system may include an air network device, for example, a satellite system or a high altitude platform (high altitude platform station, HAPS) communication system. The NTN has advantages of wide coverage, long communication distance, high reliability, high flexibility, high throughput, and the like, and is not affected by a geographical environment, a climate condition, and a natural disaster. Therefore, the NTN has been widely applied in various fields. Introducing the NTN communication to mobile network communication, for example, 5^{th}-generation (5^{th}-Generation, 5G) communication, can improve user experience. In an aspect, a satellite network can provide a communication service for an area that is difficult to be covered by a terrestrial network, for example, an ocean, a forest, a desert, or a remote region. In another aspect, the satellite network can enhance reliability of mobile communication, for example, provide a more stable communication service for users in a high-speed movement scenario, for example, a train or an airplane. In addition, the satellite network can further provide more data transmission resources, and support connections of more terminal devices.

Usually, a higher orbit of a satellite indicates a larger coverage area but a longer communication delay of the satellite. Based on an orbital altitude, satellites can be classified into the following types:
1. Low earth orbit (LEO): An orbit altitude ranges from 160 km to 2,000 km;
2. Medium earth orbit (MEO): An orbit altitude ranges from 2,000 to 35,786 km; and
3. Geostationary earth orbit (GEO): An orbital altitude is 35,786 km.

The GEO is a synchronous earth satellite orbit, and a satellite running in the orbit is stationary relative to the ground. The LEO and the MEO are collectively referred to as a non-geostationary orbit (NGSO), and a satellite running in this type of orbit moves at a high speed relative to the ground.

Depending on whether satellite beams move with satellites, for the NGSO, classification into an earth moving cell Earth Moving Cell and an earth fixed cell Earth Fixed Cell can be further performed. For the earth moving cell, the cell moves relative to the ground, and a beam direction of the satellite moves with the satellite. For the earth fixed cell or a quasi-earth fixed cell, the cell is fixed relative to the ground within specific time, and an antenna of the satellite may use a beamforming capability of the antenna to fix the beam direction in a specific area of the ground within the specific time.

Based on a working mode, satellites can be generally classified into two types. A first mode is a transparent (transparent) forwarding mode. The satellite forwards information about a cell of a terrestrial network device (for example, a base station). A function of the satellite is radio frequency filtering, frequency conversion, and frequency amplification. That is, the satellite mainly serves as an L1 relay to regenerate a physical layer signal, and does not have another higher protocol layer.

A second mode is a regenerative (regenerative) mode. The satellite has a processing function of a base station. In the regenerative working mode, satellites may be further classified into: a regenerative satellite without an inter-satellite link (inter-satellite link, ISL), where there is no inter-satellite link between satellites; a regenerative satellite with an inter-satellite link, where there is an interface between satellites for direct data exchange, and the inter-satellite link is an Xn interface; and a regenerative satellite with a DU processing function of the base station, where the satellite is used as a DU in this scenario.

Embodiments of this application may be applied to a transparent transmission satellite architecture and a regenerative satellite architecture, or may be applied to an earth moving cell (earth moving cell) scenario and a quasi-earth fixed cell (quasi-earth fixed cell) scenario.

In embodiments of this application, a terminal is also referred to as user equipment (user equipment, UE), a mobile station (mobile station, MS), a mobile terminal (mobile terminal, MT), or the like, and is a device that provides a user with voice and/or data connectivity, for example, a handheld device or a vehicle-mounted device having a wireless connection function. Currently, some examples of the terminal are: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in a remote medical surgery (remote medical surgery), a wireless terminal in a smart grid (smart grid), a wireless terminal in transportation safety (transportation safety), a wireless terminal in a smart city (smart city), a wireless terminal in a smart home (smart home), and the like.

In embodiments of this application, a base station is also referred to as an access network device, and is a radio access network (radio access network, RAN) node (or device) that connects a terminal to a wireless network. Currently, some examples of the RAN node are: a continuously evolved NodeB (gNB), a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or home NodeB, HNB), a baseband unit (baseband unit, BBU), a wireless fidelity (wireless fidelity, Wi-Fi) access point (access point, AP), and the like. In addition, in a network structure, the access network device may include a central unit (centralized unit, CU) node, a distributed unit (distributed unit, DU) node, or a RAN device including a CU node and a DU node. The RAN device including the CU node and the DU node splits protocol layers of a gNB in an NR system. Functions of some protocol layers are controlled by a CU in a centralized manner, functions of some or all remaining protocol layers are distributed in a DU, and the CU controls the DU in a centralized manner. Further, the central unit CU may be further divided into a control plane (CU-CP) and a user plane (CU-UP). The CU-CP is responsible for a control plane function, and mainly includes an RRC, and a PDCP corresponding to the control plane, namely, a PDCP-C. The PDCP-C is mainly responsible for data encryption and decryption, integrity protection, data transmission, and the like on the control plane. The CU-UP is responsible for a user plane function, and mainly includes an SDAP and a PDCP corresponding to the user plane, namely, a PDCP-U. The SDAP is mainly responsible for processing data of a core network and mapping a flow to a bearer. The PDCP-U is mainly responsible for data plane encryption and decryption, integrity protection, header compression, sequence number maintenance, data transmission, and the like. The CU-CP and the CU-UP are connected through an E1 interface. On behalf of the gNB, the CU-CP is connected to the core network through an NG interface, and is connected to the DU through an F1 interface-control plane, namely, F1-C. The CU-UP is connected to the DU through an F1 interface-user plane, namely, F1-U. It is clear that in another possible implementation, the PDCP-C is also in the CU-UP.

In embodiments of this application, a core network device is a device in a core network (core network, CN) that provides service support for a terminal. Currently, some examples of the core network device are: an access and mobility management function (access and mobility management function, AMF) entity, a session management function (session management function, SMF) entity, a user plane function (user plane function, UPF) entity, and the like, which are not listed one by one herein. The AMF entity may be responsible for access management and mobility management of the terminal. The SMF entity may be responsible for session management, for example, user session establishment. The UPF entity may be a functional entity on a user plane, and is mainly responsible for connecting to an external network. It should be noted that, the entity in this application may also be referred to as a network element or a functional entity. For example, the AMF entity may also be referred to as an AMF network element or an AMF functional entity. For another example, the SMF entity may also be referred to as an SMF network element, an SMF functional entity, or the like.

In addition, to facilitate understanding of embodiments of this application, the following several descriptions are provided.

First, in this application, "indicate" may include "directly indicate" and "indirectly indicate". When a piece of indication information is described as indicating A, the indication information may directly indicate A or indirectly indicate A, but it does not necessarily mean that the indication information includes A.

Information indicated by the indication information is referred to as to-be-indicated information. In a specific implementation process, there are a plurality of manners of indicating the to-be-indicated information. The to-be-indicated information may be sent as a whole, or may be divided into a plurality of pieces of sub-information for separate sending. In addition, sending periodicities and/or sending occasions of these pieces of sub-information may be the same or may be different. A specific sending method is not limited in this application.

Second, "at least one" shown in this application means one or more, and "a plurality of" means two or more. In addition, in embodiments of this application, "first", "second", and various numeric numbers (for example, "#1" and "#2") are merely used for distinguishing for ease of description, and are not used to limit the scope of embodiments of this application. Sequence numbers in the following processes do not mean an execution sequence. The execution sequence of the processes should be determined based on functions and internal logic of the processes, and should not constitute any limitation on implementation processes of embodiments of this application. It should be understood that objects described in this way may be interchangeable in proper cases, so that solutions other than embodiments of this application can be described. In addition, in embodiments of this application, words such as "201" and "202" are merely identifiers for ease of description, and do not limit a sequence of performing steps.

Third, in this application, the term "example", "for example", or the like represents giving an example, an illustration, or a description. Any embodiment or design scheme described as an "example" or "for example" in this application should not be explained as being more preferred or having more advantages than another embodiment or design scheme. To be precise, use of the word such as "example" or "for example" is intended to present a relative concept in a specific manner.

Fourth, "storage" in embodiments of this application may mean storage in one or more memories. The one or more memories may be separately disposed, or may be integrated into an encoder or a decoder, a processor, or a communication apparatus. Alternatively, some of the one or more memories may be separately disposed, and the other memories are integrated into the translator, the processor, or the communication apparatus. A type of the memory may be a storage medium in any form. This is not limited in this application.

Fifth, the term "and/or" in this specification describes only an association relationship for describing associated objects, and indicates that three relationships may exist. For example, A and/or B may indicate the following three cases: Only A exists, both A and B exist, and only B exists. In addition, the character "/" in this specification generally indicates an "or" relationship between the associated objects.

For ease of understanding of embodiments of this application, basic concepts in this application are first briefly described.

### 1. Conventional handover

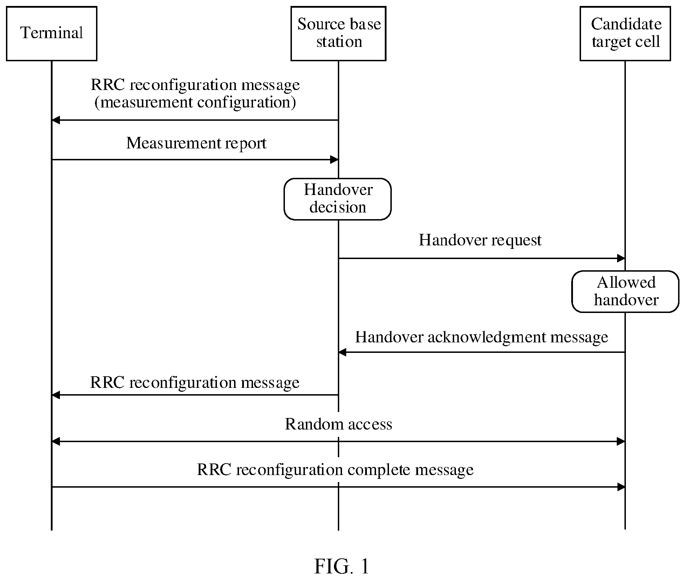

Due to movement of a UE, signal quality of a network currently accessed by the UE may deteriorate, and the UE needs to hand over to a cell with better signal quality to obtain a service. In a conventional handover procedure, handover of the UE is controlled by a network device. That is, the network device sends a handover message to indicate the cell to which the UE is to hand over and how to perform handover. As shown in FIG. 1, after receiving the handover message, the UE accesses a target cell based on content included in the handover message. In this case, a network side needs to obtain a target cell identifier. Specific handover steps are described as follows.

Step 1: A source base station sends an RRC reconfiguration message to a UE in a connected mode, to indicate the UE to perform measurement. The RRC reconfiguration message includes parameters such as a measurement object, a reporting configuration, and a measurement identifier.

Step 2: The UE measures the cell based on the RRC reconfiguration message, generates a report, and reports various events to the source base station.

Step 3: After receiving the report reported by the UE, the source base station performs decision. When a decision result is handover, the source base station sends a handover request message to a target base station.

Step 4: The target base station determines whether to allow the UE to perform handover, and if a decision result is that the UE is allowed to perform handover, sends a handover acknowledgment message to the source base station. The handover acknowledgment message includes parameters such as a new C-RNTI and a security-related algorithm of the target base station.

Step 5: After receiving the handover acknowledgment message sent by the target base station, the source base station sends an RRC reconfiguration message (a handover command) to the UE. Content included in the RRC reconfiguration message is from the handover acknowledgment message in step 4. Specifically, a handover command in an NR system includes related information of the target cell and a related configuration parameter required for the UE to access the target cell, for example, target cell information (for example, a PCI of the target cell and frequency information corresponding to the target cell), a C-RNTI allocated by the target cell to the UE, and RACH resource information (for example, a dedicated RACH resource and/or a common RACH resource) required for accessing the target cell.

Step 6: The UE initiates random access to the target base station based on the handover command. In an existing handover procedure, the UE may disconnect from the source base station, and data receiving and sending of the UE may be temporarily interrupted before the UE successfully accesses the target base station.

Step 7: The UE sends an RRC reconfiguration complete message to the target base station.

### 2. Conditional handover (CHO)

In a terrestrial network (TN), due to movement of a user equipment, signal quality of a current serving cell may deteriorate, and the user needs to hand over to a neighboring cell with better signal quality. Different from the terrestrial network, a cell coverage area of a satellite is very large (where a coverage radius is dozens of to hundreds of kilometers), and the user is generally still within a cell coverage range of the satellite after the movement. In addition, high-speed movement in an NGSO relative to the ground causes short coverage duration of the satellite in an area on the ground, and consequently, a serving cell is frequently changed for the user. Therefore, different from the terrestrial network, mobility of the satellite is a main cause of user handover.

Therefore, for an earth fixed cell or a quasi-earth fixed cell, the satellite can stare at the ground for a period of time. When the satellite is about to move out of sight of UEs, all UEs in the cell need to hand over to a next satellite. For an earth moving cell, the cell moves with the satellite, and in a process in which the satellite scans the ground, UEs continuously perform handover. For the NGSO, high-speed movement of the satellite causes frequent user handover. For the earth moving cell, frequent handover of a large quantity of users causes high signaling overheads. For the earth fixed cell or the quasi-earth fixed cell, simultaneous handover of the large quantity of users causes a signaling storm and signaling congestion. Therefore, in the NGSO, resolving a problem of signaling overheads caused by frequent handover of users is a key to improving communication efficiency of an NTN system.

To avoid a case in which signaling cannot be normally exchanged between a UE and a source base station due to further deterioration of link quality of the source base station, and consequently, handover cannot be successfully performed, a conditional handover (conditional handover, CHO) mechanism is proposed in the conventional technology. Specifically, the source base station sends CHO configuration information to the UE when the link quality between the source base station and the UE is good, where the configuration information includes a CHO trigger condition and information about a candidate target cell (for example, a CGI of the candidate target cell, or a PCI of the candidate target cell and frequency information corresponding to the candidate target cell). After receiving the configuration information, the UE determines, based on the configuration information, whether the candidate target cell meets the handover trigger condition, and uses a candidate target cell that meets the handover trigger condition as a target cell. Then, the UE initiates random access to the target cell. After the random access succeeds, the UE sends an RRC reconfiguration complete message to a base station (that is, a target base station) to which the target cell belongs, to notify the target base station that conditional handover is completed.

Step 1: The source base station configures the UE to perform neighboring cell measurement, where measurement configuration information may be delivered by using an RRC reconfiguration message. The UE performs measurement and reports a measurement result to the source base station.

Step 2: The source base station selects a candidate target cell based on the measurement result, and sends a handover request to the candidate target cell.

Step 3: A candidate target base station sends a handover response message to the source base station, where the handover response message carries configuration information of the candidate target cell.

Step 4: The source base station sends handover configuration information to the UE.

Step 5: When receiving the handover configuration information, the UE starts to evaluate a CHO execution condition of the candidate target cell, and maintains a connection to the source base station. If at least one CHO candidate target cell meets a corresponding CHO execution condition, the UE leaves the source base station, hands over to the target base station, and then sends an RRC reconfiguration complete message to the target base station to complete an RRC handover process. The UE releases a stored CHO configuration after successfully completing the RRC handover procedure.

In an earth fixed cell scenario of an NTN, a satellite may adjust its beam, so that an area range covered by the beam remains unchanged within a period of time. Then, when the satellite cannot provide a service or coverage for a cell, a next satellite provides coverage. In this scenario, a ground base station may remain unchanged. Therefore, radio resource configuration information of a terminal can remain unchanged before and after the satellite changes. For example, a physical cell identifier PCI of the cell is not changed, and L3 signaling handover does not need to be introduced. The terminal only needs to re-perform downlink synchronization and uplink synchronization with the cell through a new satellite after the new satellite arrives (for example, at a moment at which the satellite stops serving the cell before the change, or at a moment at which the satellite starts to serve the cell after the change, or at any moment between the moment at which the satellite starts to serve the cell after the change and the moment at which the satellite stops serving the cell before the change), and a UE and a base station side remain a radio resource configuration allocated to the terminal before handover unchanged. In this way, a problem of a signaling storm caused by the handover in this scenario can be resolved. The method may be referred to as a handover solution in which the satellite changes but the cell identifier remains unchanged and no L3 handover command is required.

There are two handover scenarios for the earth fixed cell: hard handover (where coverage of successive satellites does not overlap) and soft handover (where coverage of successive satellites overlaps).

Optionally, in the earth fixed cell scenario of the NTN, when the satellite that provides the service or coverage for the cell is handed over, the physical cell identifier PCI of the cell may change. Therefore, the radio resource configuration information of the terminal can remain unchanged before and after the satellite changes, and the terminal and the base station side only need to change the physical cell identifier of the cell. In this satellite handover scenario, the L3 signaling handover does not need to be introduced for the terminal. The terminal only needs to re-perform downlink synchronization and uplink synchronization with the cell through the new satellite after the new satellite arrives (for example, at the moment at which the satellite stops serving the cell before the change, or at the moment at which the satellite starts to serve the cell after the change, or at any moment between the moment at which the satellite starts to serve the cell after the change and the moment at which the satellite stops serving the cell before the change), and the UE and the base station side remain the radio resource configuration allocated to the terminal before the handover unchanged, but the physical cell identifier of the cell needs to be changed. In this way, the problem of the signaling storm caused by the handover in this scenario can also be resolved. The method may be referred to as a handover solution in which the satellite changes and the cell identifier changes and no L3 handover command is required.

However, due to mobility of the UE, the UE at an edge of the cell coverage may move out of a coverage range of a current satellite or a current cell. Alternatively, because coverage ranges of new and old satellites are different, the coverage range of the new satellite is smaller than that of the current serving satellite, and the UE at an edge of the cell may not be within the coverage range of the new satellite. Therefore, when L3-signaling-free handover (or a satellite change, where the L3-signaling-free handover may also be referred to as the satellite change below) is performed, there is a risk that the UE at the edge of the cell fails to access a target satellite.

To prevent the UE at the edge of the cell from failing to perform handover in an L3-signaling-free handover manner due to movement of the UE or different coverage ranges of the new and old satellites, a network may also configure CHO for the UE, or configure CHO only for the UE at the edge of the cell. For example, when signal quality of a cell with a PCI #1 deteriorates, the UE may autonomously hand over to a cell corresponding to a PCI #2, thereby improving handover robustness.

To improve the handover robustness, a network side may configure the CHO for the UE. However, ephemeris-related information of a candidate target cell may need to be updated due to a change of a satellite. If the satellite of the candidate target cell changes, the network side needs to update CHO configuration information, for example, delete information about a disappeared candidate target cell, or configure information about a new candidate target cell. This easily causes an increase in signaling overheads.

Therefore, embodiments of this application provide a communication method, to reduce signaling overheads of a terminal when the terminal performs conditional handover.

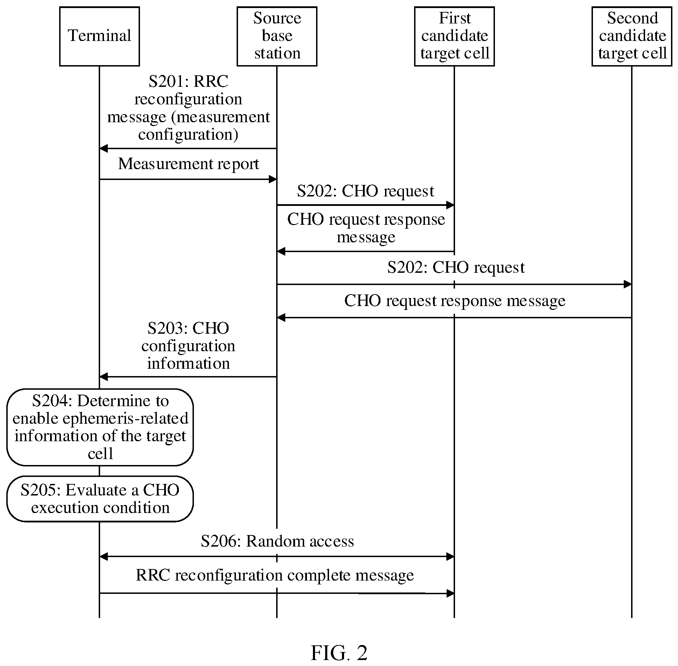

FIG. 2 is a schematic flowchart of a communication method according to this application. The method includes the following steps.

S201: A source base station sends measurement configuration information to a terminal, and the terminal performs measurement based on the measurement configuration information, and reports a measurement result to the source base station.

Specifically, the measurement configuration information includes a measurement object, a reporting configuration, a measurement ID, a measurement configuration, and a measurement gap configuration.

S202: The source base station selects a candidate target cell for the terminal based on a measurement report, and sends a CHO request message to the candidate target cell; and after receiving the CHO request message, the candidate target cell sends a CHO request response message to the source base station.

For example, after receiving the CHO request message, the candidate target cell performs access control. When determining to accept the CHO request of the source base station, the candidate target cell sends the CHO request response message to the source base station, where the CHO request response message includes configuration information for the terminal to access the candidate target cell.

Optionally, there may be one or more candidate target cells. For example, the source base station sends a CHO request to a first candidate target cell. After determining that the CHO request is to be accepted, the first candidate target cell sends a CHO request response message to the source base station, where the CHO request response message includes configuration information of the first candidate target cell. The source base station also sends a CHO request to a second candidate target cell. After determining that the CHO request is to be accepted, the second candidate target cell sends a CHO request response message to the source base station, where the CHO request response message includes configuration information of the second candidate target cell.

It should be noted that S201 is optional. In S202, the source base station may also select a candidate target cell for the terminal based on other information.

S203: The source base station sends CHO configuration information to the terminal. The CHO configuration information is first information. The CHO configuration information indicates the terminal to hand over to the candidate target cell, the CHO configuration information includes a plurality of sets of ephemeris-related information corresponding to the candidate target cell, and the candidate target cell includes a first cell.

For example, the source base station sends the CHO configuration information to the terminal, where the CHO configuration information includes NTN configuration information. For example, serving cell configuration information (Serving Cell Config Common) carries a non-terrestrial network configuration (ntn-config), and the non-terrestrial network configuration carries the plurality of sets of ephemeris-related information corresponding to the candidate target cell. The CHO configuration information further includes handover configuration information (for example, information carried in reconfiguration with synchronization information ReconfigurationWithSync).

Optionally, the ephemeris-related information (or satellite-related information) includes at least one of the following: ephemeris information, reference time (such as epochTime) of the ephemeris information, an uplink synchronization validity period, cell-level Koffset (a scheduling time offset), Kmac, and timing advance information, such as a common TA-related parameter, coverage stop time, and coverage start time.
epochTime indicates epoch time of NTN assistance information (or related information). When explicitly provided by a SIB or by dedicated signaling, epochTime is start time of a DL subframe, and indicated by a downlink frame number and a subframe number for sending the assistance information. If an epochTime field is not carried, configured, or present, the epoch time is end time of an SI window for scheduling a SIB 19.

Optionally, each set of ephemeris-related information corresponding to the candidate target cell includes corresponding enabling time, or the CHO configuration information further includes enabling time that is in one-to-one correspondence with the plurality of sets of ephemeris-related information.

Optionally, the enabling time may be a time point, and UE enables an ephemeris at a corresponding time point. For example, the time point may be UTC time. Alternatively, the enabling time may be a time period, for example, [t1, t2]; or the enabling time may be determined based on ephemeris validity time in the ephemeris-related information; or the enabling time is reference time or an offset value relative to the reference time. For example, the reference time may be epoch time of the ephemeris information; and for another example, the reference time may be time at which the CHO configuration information is received. For example, when the enabling time is the reference time or the offset value relative to the reference time, offset values of the enabling time corresponding to the plurality of sets of ephemeris-related information are different, and the plurality of sets of ephemeris-related information are in one-to-one correspondence with different enabling time. The terminal enables corresponding ephemeris information based on enabling time corresponding to different moments or time periods. For example, when the enabling time is coordinated universal time UTC, the plurality of sets of ephemeris information are in one-to-one correspondence with different enabling time, and the terminal enables corresponding ephemeris information based on enabling time corresponding to different moments or time periods.

For example, the first candidate target cell is one of a plurality of candidate target cells configured by the source base station for the terminal, a first satellite is a satellite that currently provides coverage for the first candidate target cell, a second satellite is a next satellite that provides coverage for the first candidate target cell, and the second satellite provides the coverage for the first candidate target cell later than the first satellite. Optionally, the CHO configuration information in this case may include ephemeris-related information of the first satellite, ephemeris-related information of the second satellite, and ephemeris-related information of another satellite that subsequently provides coverage for the first candidate target cell. Alternatively, the CHO configuration information in this case may include ephemeris-related information of the first satellite and corresponding first enabling time, ephemeris-related information of the second satellite and corresponding second enabling time, and ephemeris-related information of another satellite that subsequently provides coverage for the first candidate target cell and corresponding enabling time.

Optionally, time periods in which the first satellite and the second satellite provide the coverage for the first candidate target cell may not overlap. That is, after the coverage provided by the first satellite for the first candidate target cell disappears, the second satellite provides the coverage for the first candidate target cell after a first time interval Gap1, where Gap1 is greater than or equal to 0. Optionally, time periods in which the first satellite and the second satellite provide the coverage for the first candidate target cell may overlap.

Optionally, when the first satellite and the second satellite provide the coverage for the first candidate target cell, a physical cell identifier of the first candidate target cell remains unchanged. That is, when a satellite corresponding to the first candidate target cell is handed over, the physical cell identifier of the first candidate target cell remains unchanged or changes, and the foregoing described handover solution in which no L3 handover command is required may be used between the first candidate target cell and the terminal served by the first candidate target cell.

Optionally, when the first satellite and the second satellite provide the coverage for the first candidate target cell, the physical cell identifier of the first candidate target cell may change. When the physical cell identifier of the candidate target cell changes, for example, in a soft handover scenario, L3-command-free handover is performed. In this case, the CHO configuration information may further include a plurality of physical cell identifiers, for example, PCIs. For example, the target cell is one of the plurality of candidate target cells configured by the source base station for the terminal, the first satellite is a satellite that currently provides coverage for the target cell, the second satellite is a next satellite that provides coverage for the target cell, and the second satellite provides the coverage for the first target cell later than the first satellite. Optionally, time periods in which the first satellite and the second satellite cover the target cell overlap. In this case, the CHO configuration information includes at least one of the following: handover configuration information (for example, information carried in reconfiguration with synchronization information ReconfigurationWithSync) of at least one candidate target cell, and at least one piece of ephemeris information of the at least one candidate target cell. For example, the source base station configures M candidate target cells for the terminal, and each candidate target cell is configured with ephemeris information of N_m (m=1, 2, 3, ..., M) satellites. N_m is greater than or equal to 1, and a value of N_m may vary. Each piece of ephemeris information corresponds to one enabling time. For physical cell identifiers corresponding to the M candidate cells, each candidate target cell may correspond to K_m (m=1, 2, 3, ..., M) physical cell identifiers. N_m is greater than or equal to 1, and a value of N_m may vary. Optionally, the values of N_m and K_m may be the same, that is, a PCI needs to be changed each time a satellite changes. Alternatively, the values of N_m and K_m may be different, corresponding to a scenario in which a satellite changes but a PCI is not updated.

For example, the CHO configuration information in this case includes at least one of the following: the ephemeris-related information of the first satellite and a corresponding first physical cell identifier, the ephemeris-related information of the second satellite and a corresponding second physical cell identifier, and ephemeris-related information of another satellite that subsequently provides coverage for the first candidate target cell and a corresponding physical cell identifier. Alternatively, the CHO configuration information in this case includes at least one of the following: the ephemeris-related information of the first satellite, corresponding first enabling time, and a corresponding first physical cell identifier; the ephemeris-related information of the second satellite, corresponding second enabling time, and a corresponding second physical cell identifier; and ephemeris-related information of another satellite that subsequently provides coverage for the first target cell, corresponding enabling time, and a corresponding physical cell identifier.

Optionally, a source cell in the source base station may broadcast, in a broadcast message, enabling time corresponding to each set of ephemeris-related information corresponding to the candidate target cell. In an implementation, a CHO configuration carries a plurality of sets of ephemeris-related information. At least one service stop time or service start time of the candidate target cell is broadcast in the broadcast message. The service stop time or the service start time in the broadcast message is in one-to-one correspondence with the ephemeris-related information in the CHO configuration. In another implementation, a CHO configuration carries a plurality of sets of ephemeris-related information. One service stop time of the candidate target cell is broadcast in the broadcast message. When the terminal receives the CHO configuration, the terminal considers that a first set of ephemeris-related information is valid. After the broadcast service stop time of the candidate target cell is reached, the terminal considers that a second set of ephemeris-related information is valid. The source cell in the source base station may also update the broadcast message, to carry service stop time of a new candidate target cell, and the terminal re-obtains service stop time of the candidate target cell. After the new service stop time is reached, the terminal considers that a third set of ephemeris-related information is valid, and the source cell re-obtains the service stop time of the candidate target cell. The rest is deduced by analogy.

In this embodiment of this application, the CHO configuration information sent by the source base station to the terminal carries ephemeris-related information and enabling time of a plurality of satellites, so that when a satellite of a target cell that the terminal is to access changes, the source base station does not need to send changed CHO configuration information to the terminal. In other words, the source base station does not need to continuously delete information of disappeared candidate target cells or configure a new candidate target cell, and the terminal only needs to perform conditional handover based on corresponding ephemeris-related information, thereby effectively reducing signaling overheads.

S204: The terminal receives the CHO configuration information.

The terminal determines, based on the CHO configuration information, to enable the corresponding ephemeris-related information.

Optionally, the CHO configuration information may further include enabling time respectively corresponding to the plurality of sets of ephemeris-related information. The terminal determines, based on the enabling time corresponding to the ephemeris-related information of the satellites carried in the CHO configuration information, a satellite that is of the target cell and whose ephemeris-related information is to be used. Optionally, the enabling time of the ephemeris-related information that the terminal determines to enable may be equal to or later than time at which the terminal determines to hand over to the target cell.

For example, the first satellite currently covers the target cell, and enabling time may be time at which the CHO configuration information is received; or when the first satellite ends coverage of the target cell, the second satellite is about to cover the target cell, and enabling time may be offset time relative to the time at which the CHO configuration information is received, or start time at which the second satellite covers the target cell, or time within the first time interval Gap1 between the coverage provided by the first satellite and coverage provided by the second satellite. This is not limited in embodiments of this application.

For example, the first satellite currently covers the target cell, and the terminal enables the ephemeris-related information of the first satellite at the first enabling time based on the CHO configuration information. Alternatively, when the first satellite ends the coverage of the target cell, and the second satellite is about to cover the target cell, the terminal enables the ephemeris-related information of the second satellite at the second enabling time based on the CHO configuration information.

Optionally, the UE determines, based on ephemeris validity time of a target satellite, whether to change the satellite, where the ephemeris validity time is configured for the UE during a CHO configuration. When the source base station determines the CHO configuration information, the ephemeris-related information is configured according to a sequence of covering candidate target cells by the satellite. After current ephemeris information expires, the UE makes new ephemeris information effective in sequence. For example, when ephemeris validity time of a satellite 1 expires, the UE makes an ephemeris of a satellite 2 effective. The rest is deduced by analogy. In this case, effective time of the ephemeris information does not need to be explicitly indicated, and the UE makes the ephemeris information effective in sequence.

Optionally, the UE determines, based on time at which the target satellite covers the target cell, when to make the new ephemeris information effective. For example, satellite configuration information (for example, ntn-config) carried in the CHO configuration information carries start time, for example, t-start, at which each satellite covers the target cell; or time, for example, t-service, at which each satellite stops covering the target cell. The UE makes ephemeris information of a corresponding satellite effective at t-start corresponding to each satellite, or makes ephemeris information of a next satellite effective when t-service of each piece of ephemeris information expires. Optionally, when the CHO configuration information is determined, the ephemeris information is configured according to a sequence of covering neighboring cells by the satellite.

Optionally, the terminal determines effective ephemeris-related information based on current time. For example, if the current time is after enabling time corresponding to ephemeris-related information #1 and before enabling time corresponding to ephemeris-related information #2, the terminal uses the ephemeris-related information #1. For another example, if the current time is within validity time corresponding to ephemeris-related information #1, the terminal uses the ephemeris-related information #1.

At different moments or in different time periods, the terminal uses a same CHO handover configuration and ephemeris-related information of corresponding enabling time to access a target base station. For example, the terminal accesses the target base station at a moment t1 or in the time period [t1, t2] by using the CHO handover configuration and the ephemeris-related information of the first satellite.

Optionally, when the physical cell identifier of the candidate target cell changes, for example, in the soft handover scenario, when L3-command-free handover is performed, and the first satellite currently covers the target cell, the terminal enables the ephemeris-related information of the first satellite and the first physical cell identifier at the first enabling time based on the CHO configuration information. Alternatively, when the first satellite ends the coverage of the target cell, and the second satellite is about to cover the target cell, the terminal enables the ephemeris-related information of the second satellite and the second physical cell identifier at the second enabling time based on the CHO configuration information. At different moments or in different time periods, the terminal uses a same CHO handover configuration, a PCI of corresponding enabling time, and ephemeris-related information of the corresponding enabling time to access the target base station.

S205: The terminal performs CHO execution condition decision based on the CHO configuration information.

Specifically, a CHO execution condition includes a time condition and/or a distance condition. The time condition includes a first time window, and when a current moment is within a range of the first time window, the time condition is met. For example, the first time window is [t1, t2], and the terminal may perform CHO within [t1, t2].

Specifically, the distance condition includes a first distance threshold D1 and a second distance threshold D2. When a distance from the terminal to the target cell is less than the first distance threshold D1, and a distance from the terminal to the source cell is greater than the second distance threshold D2, the distance condition is met. Optionally, the distance from the terminal to the target cell may be a distance from the terminal to a reference point of the target cell, and the distance from the terminal to the source cell may be a distance from the terminal to a reference point of the source cell. Optionally, the first distance threshold and the second distance threshold may be configured by a network side for the terminal.

Optionally, the execution condition may further include a measurement event. When one or more of the time condition, the distance condition, or the measurement event are met, the terminal meets the execution condition. For example, the terminal meets one of the following: the time condition, the distance condition, the measurement event, the time condition and the measurement event, and the distance condition and the measurement event. Optionally, any two or three of the time condition, the distance condition, and the measurement event are jointly configured, and conditional handover is performed when any one of the two or three effective conditions is met.

S206: The terminal performs L3-free signaling handover in the source cell at first time, and performs downlink synchronization with the source cell through a target satellite of the source cell; or the terminal determines that a CHO execution condition of a candidate target cell is met, and the terminal accesses the candidate target cell.

Optionally, the first time may be time information (t-service) representing when the source cell stops a service, that is, time information indicating when the source cell stops covering a current area; or may be time (t-start) at which a next satellite broadcast by the source cell provides a service for the source cell, or any time from t-start to t-service.

Before S201, the communication method further includes: The source base station sends indication information of the L3-free signaling handover to the terminal. A function of the indication information of the L3-free signaling handover includes: When the terminal receives the indication information and the terminal supports a capability of the L3-free signaling handover, the terminal performs L3-free signaling handover, where the indication information indicates the terminal to perform L3-free signaling handover.

For example, the indication information may be delivered in system information, and the indication information may be a Boolean value and indicates the terminal by using true or false; or the indication information indicates whether the L3-free signaling handover is supported. Alternatively, the indication information may be a physical cell identifier or the like corresponding to the next satellite of the source cell, and the physical cell identifier implicitly indicates that the terminal can perform L3-free signaling handover, and the terminal changes to a PCI carried in the system information. Alternatively, the indication information may be represented by using indicated time information, and the indicated time information implicitly represents that the terminal performs L3-free signaling handover.

Optionally, when some terminals or a terminal at an edge of a cell cannot perform downlink synchronization with the source cell via the next satellite of the source cell, the terminal performs execution condition decision based on the CHO configuration information. When the execution condition is met, the terminal performs conditional handover on the target cell, and accesses the target cell.

Optionally, when the terminal determines that a CHO execution condition of a candidate target cell is met, a terminal device determines which ephemeris-related information corresponding to the candidate target cell is to be enabled. Then, the terminal accesses the candidate target cell based on the ephemeris-related information. For a specific method for the terminal device to determine which ephemeris-related information corresponding to the candidate target cell is to be enabled, refer to the method described in S204. Optionally, in S204, when receiving the CHO configuration information, the terminal does not need to determine which ephemeris-related information corresponding to the candidate target cell is to be enabled. Instead, in S206, when the execution condition corresponding to the candidate target cell is met, the terminal device determines which ephemeris-related information corresponding to the candidate target cell is to be enabled.

In this embodiment of this application, the CHO configuration information carries same handover configuration information and ephemeris-related information of a plurality of satellites, so that when a satellite of the candidate target cell of the terminal changes, the source base station does not need to send changed CHO configuration information to the terminal. In other words, the source base station does not need to continuously delete information of disappeared candidate target cells or configure information of a new candidate target cell, and the terminal only needs to enable ephemeris-related information of a corresponding satellite in a time period with satellite coverage, to perform conditional handover, thereby effectively reducing signaling overheads.

After the execution condition of the target cell is met, according to a current protocol, the terminal may immediately use a configuration of the target cell, and access the candidate target cell. In a scenario in which the target cell is an earth fixed cell Earth Fixed Cell or a quasi-earth fixed cell and a satellite may change, the target cell meets the CHO execution condition, and the satellite of the target cell is about to change. In this case, if the source cell is directly disconnected, the terminal may not immediately access the candidate target cell (for example, service start time of a new satellite of the candidate target cell is not reached), and therefore, communication of the terminal may be interrupted, affecting service performance.

Therefore, embodiments of this application further provide a communication method, so that the terminal can successfully access a target base station of the target cell, thereby reducing communication service interruption time.

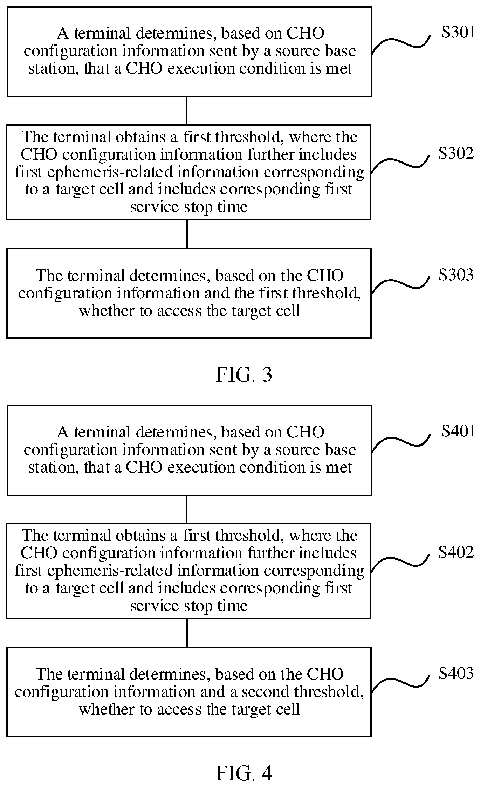

FIG. 3 is a schematic flowchart of a communication method according to this application. The method includes the following steps.

S301: A terminal determines, based on CHO configuration information sent by a source base station, that a CHO execution condition corresponding to a candidate target cell is met.

When one or more of a time condition, a distance condition, or a measurement event are met, the terminal meets the execution condition. For example, the terminal meets one or more of the following conditions: the time condition, the distance condition, or the measurement event. A specific execution condition and decision that the execution condition is met are described in S204, and details are not described herein again.

In this step, if the CHO execution condition corresponding to the candidate target cell is met, the candidate target cell is determined as a target cell.

Optionally, before S301, S202 to S204 in FIG. 2 are performed.

S302: The terminal obtains a first threshold.

Optionally, the CHO configuration information further includes first ephemeris-related information corresponding to the target cell and corresponding first service stop time. Alternatively, a source cell broadcasts first service stop time in a broadcast message. The first service stop time is time at which a satellite corresponding to the first ephemeris-related information corresponding to the target cell stops serving the target cell. A time interval between a current moment and the first service stop time is remaining service time.

Optionally, the first service stop time may be read by the terminal by using system information block SIB, for example, a SIB 19. The SIB may be a SIB broadcast by a serving cell, or may be a SIB broadcast by a neighboring cell, or may be sent to the terminal when a network side sends the CHO configuration information. This is not specifically limited in embodiments of this application. The remaining service time may alternatively be obtained by the terminal through calculation based on the ephemeris-related information and/or cell coverage information (for example, a cell reference position and a cell radius).

The terminal obtains the first threshold. Optionally, the first threshold can at least support the terminal in completing random access. For example, a value of the first threshold is greater than round-trip time RTT from the terminal to a target base station. Optionally, the first threshold may be preconfigured by the network side for the terminal, or may be carried in the CHO configuration information and sent by the source base station to the terminal, or the first threshold is a value agreed on in a protocol. This is not specifically limited in embodiments of this application.

A sequential relationship between S301 and S302 is not limited in this application.

S303: The terminal determines, based on the first threshold, whether to access the target cell.

Specifically, when the remaining service time of the target cell is greater than or equal to the first threshold, that is, the terminal has sufficient time to access the target cell, the terminal performs CHO on the target cell, and the terminal accesses the target cell. When the remaining service time is less than the first threshold, the terminal cannot successfully perform handover before a next satellite of the target cell provides coverage, or the terminal cannot successfully perform handover before current satellite coverage of the target cell disappears, or the terminal cannot successfully perform handover before the current target cell disappears. Successful handover may mean that the terminal successfully accesses the target cell and does not perform CHO on the target cell.

Optionally, in this application, S301 and S303 may alternatively be a same step. That is, when determining whether the CHO execution condition corresponding to the candidate target cell is met, the terminal further needs to consider content in S303. That is, when one or more of a time condition, a distance condition, or a measurement event corresponding to a candidate target cell are met, and remaining service time of the candidate target cell is greater than or equal to the first threshold, the terminal considers that the CHO execution condition is met. When none of a time condition, a distance condition, or a measurement event corresponding to a candidate target cell is met, and remaining service time of the candidate target cell is less than the first threshold, the terminal considers that the CHO execution condition is not met.

FIG. 4 is a schematic flowchart of another communication method according to this application. The method includes the following steps.

S401: A terminal determines, based on CHO configuration information sent by a source base station, that a CHO execution condition corresponding to a candidate target cell is met.

Optionally, refer to the descriptions in S301.

S402: The terminal obtains a second threshold.

Optionally, the CHO configuration information further includes service stop time of ephemeris-related information corresponding to the terminal in a current source cell, or time at which a satellite corresponding to a current source cell stops providing a service for the source cell, that is, second service stop time. Alternatively, a source cell broadcasts second service stop time in a broadcast message.

S403: The terminal determines, based on the second threshold, whether to access a target cell.

Specifically, a first time interval is a time interval between a current moment and the second service stop time. When the first time interval is less than or equal to the second threshold, the terminal performs CHO to hand over to the target cell, and the terminal accesses the target cell. When the first time interval is greater than the second threshold, the terminal can further continue communication in the source cell, and the terminal does not perform CHO on the target cell. The terminal may continue to determine whether the CHO execution condition corresponding to the candidate target cell is met and whether the first time interval is less than or equal to the second threshold. When the terminal executes an L3-signaling-free handover command corresponding to the source cell, the terminal accesses the source cell through a new satellite of the source cell, and the terminal may reserve the CHO configuration information of the candidate target cell.

Optionally, the second threshold may be preconfigured by a network side for the terminal, or may be carried in the CHO configuration information and sent by the source base station to the terminal.

Optionally, in this application, S401 and S403 may alternatively be a same step. That is, when determining whether the CHO execution condition corresponding to the candidate target cell is met, the terminal further needs to consider content in S403. That is, when one or more of a time condition, a distance condition, or a measurement event corresponding to a candidate target cell are met, and the first time interval is less than or equal to the second threshold, the terminal considers that the CHO execution condition is met. When none of a time condition, a distance condition, or a measurement event corresponding to a candidate target cell is met, and the first time interval is greater than the second threshold, the terminal considers that the CHO execution condition is not met. Optionally, FIG. 3 and FIG. 4 may be combined. That is, the terminal determines, based on the first threshold and the second threshold, whether to access the target cell.

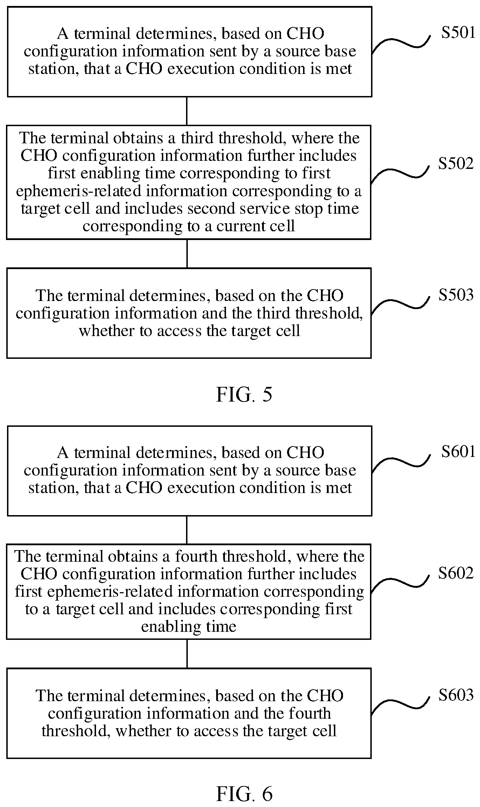

FIG. 5 is a schematic flowchart of another communication method according to this application. The method includes the following steps.

S501: A terminal determines, based on CHO configuration information sent by a source base station, that a CHO execution condition is met.

Optionally, refer to the descriptions in S301.

S502: The terminal obtains a third threshold.

Optionally, the CHO configuration information further includes first enabling time corresponding to first ephemeris-related information corresponding to a target cell and second service stop time corresponding to the target cell. Alternatively, a source cell broadcasts the first enabling time or the second service stop time in a broadcast message. The first enabling time may also be referred to as time at which a next satellite corresponding to the target cell starts to provide a service for the target cell. The second service stop time is time at which a current satellite corresponding to the target cell stops providing a service for the target cell.

S503: The terminal determines, based on the third threshold, whether to access the target cell.

Specifically, a second time interval is a time interval between the first enabling time and the second service stop time. When the second time interval is less than or equal to the third threshold, the terminal performs CHO to hand over to the target cell, and the terminal accesses the target cell. When the second time interval is greater than the third threshold, the terminal can continue communication in the source cell, and the terminal does not perform CHO on the target cell. The terminal may continue to determine whether the CHO execution condition corresponding to a candidate target cell is met and whether the second time interval is less than or equal to the third threshold. When the terminal executes an L3-signaling-free handover command corresponding to the source cell, the terminal accesses the source cell through a new satellite of the source cell, and the terminal may reserve the CHO configuration information of the candidate target cell.

Optionally, the third threshold may be preconfigured by a network side for the terminal, or may be carried in the CHO configuration information and sent by the source base station to the terminal.

Optionally, in this application, S501 and S503 may alternatively be a same step. That is, when determining whether the CHO execution condition corresponding to the candidate target cell is met, the terminal further needs to consider content in S503. That is, when one or more of a time condition, a distance condition, or a measurement event corresponding to a candidate target cell are met, and the second time interval is less than or equal to the third threshold, the terminal considers that the CHO execution condition is met. When none of a time condition, a distance condition, or a measurement event corresponding to a candidate target cell is met, and the second time interval is greater than the third threshold, the terminal considers that the CHO execution condition is not met.

FIG. 6 is a schematic flowchart of another communication method according to this application. The method includes the following steps.

S601: A terminal determines, based on CHO configuration information sent by a source base station, that a CHO execution condition is met.

Optionally, refer to the descriptions in S301.

S602: The terminal obtains a fourth threshold.

Optionally, the CHO configuration information further includes first ephemeris-related information corresponding to a target cell and corresponding first enabling time. Alternatively, a source cell broadcasts the first enabling time in a broadcast message. The first enabling time may also be referred to as time at which a next satellite corresponding to the target cell starts to provide a service for the target cell.

S603: The terminal determines, based on the fourth threshold, whether to access the target cell.

Specifically, a third time interval is a time interval between a current moment at which the terminal performs determining and the first enabling time. When the third time interval is less than or equal to the fourth threshold, the terminal performs CHO to hand over to the target cell, and the terminal accesses the target cell. When the third time interval is greater than the fourth threshold, the terminal can continue communication in the source cell, and the terminal does not perform CHO on the target cell. The terminal may continue to determine whether the CHO execution condition corresponding to a candidate target cell is met and whether the third time interval is less than or equal to the fourth threshold. When the terminal executes an L3-signaling-free handover command corresponding to the source cell, the terminal accesses the source cell through a new satellite of the source cell, and the terminal may reserve the CHO configuration information of the candidate target cell.

Optionally, the fourth threshold may be preconfigured by a network side for the terminal, or may be carried in the CHO configuration information and sent by the source base station to the terminal.

Optionally, in this application, S601 and S603 may alternatively be a same step. That is, when determining whether the CHO execution condition corresponding to the candidate target cell is met, the terminal further needs to consider content in S603. That is, when one or more of a time condition, a distance condition, or a measurement event corresponding to a candidate target cell are met, and the third time interval is less than or equal to the fourth threshold, the terminal considers that the CHO execution condition is met. When none of a time condition, a distance condition, or a measurement event corresponding to a candidate target cell is met, and the third time interval is greater than the fourth threshold, the terminal considers that the CHO execution condition is not met.

Optionally, S602 is optional, and S603 is replaced with that the terminal determines, based on the first enabling time, whether to access the target cell. When the terminal determines that the CHO execution condition corresponding to the target cell is met and a current moment reaches the first enabling time or is after the first enabling time, the terminal performs CHO to hand over to the target cell.

According to the communication method provided in this embodiment of this application, on a basis that the conditional handover execution condition is met, whether the terminal performs conditional handover on the target cell is further decided, so that a problem, for example, a communication problem, caused by insufficient time or excessively long waiting time of the terminal accessing the target cell, can be alleviated, terminal handover efficiency can be improved, and service interruption time can be shortened.

When a satellite of the candidate target cell changes, ephemeris-related information in the CHO configuration information needs to be changed, and the source base station needs to update the CHO configuration information and send CHO reconfiguration information to the terminal. However, a change of the CHO configuration information is triggered before the satellite changes (that is, before t-service), and therefore, a problem of time synchronization between time at which the terminal uses the CHO reconfiguration information and time at which a changed satellite covers the candidate target cell needs to be considered. If synchronization is not performed, handover efficiency is affected. Therefore, embodiments of this application further provide a synchronization method, so that time at which a terminal uses CHO reconfiguration information is consistent with time at which a changed satellite covers a candidate target cell, that is, the terminal using the CHO reconfiguration information synchronizes with the changed satellite covering the candidate target cell.

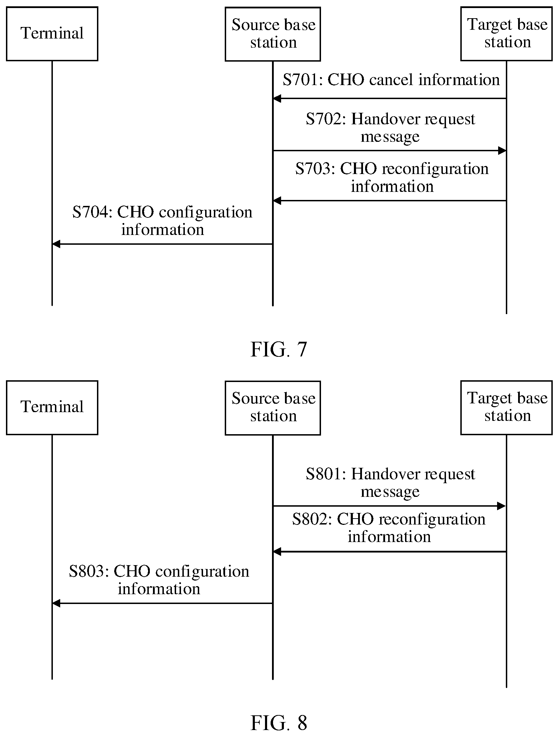

FIG. 7 is a schematic flowchart of a synchronization method according to an embodiment of this application. A target base station triggers a change of CHO configuration information before a satellite changes, and a target cell generates new CHO configuration information, where the CHO configuration information carries ephemeris-related information of a changed satellite. A source base station delivers CHO reconfiguration information to a terminal when the changed satellite arrives.

For example, a moment at which a first satellite starts to cover the target cell is t1, and a moment at which the first satellite ends coverage of the target cell is t-service1; and a moment at which a second satellite starts to cover the target cell is t2, and a moment at which the second satellite ends coverage of the target cell is t-service2.

The satellite of the target cell changes before t-service1. In this case, the target base station triggers the change of the CHO configuration information, and the configuration information carries ephemeris-related information of the second satellite. Optionally, the configuration information may carry the time at which the second satellite starts to cover the target cell, for example, t2. After receiving the CHO reconfiguration information, the terminal makes new CHO configuration information effective at the moment t2. A specific signaling process may be as follows:

S701: The target base station sends CHO cancel (conditionalHandoverCancel) information to the source base station.

Specifically, the CHO cancel information carries a cause value (cause value), where the cause value identifies that the CHO configuration information or a resource configured by the terminal changes, or ephemeris-related information of a candidate target cell changes. Optionally, the cause value may be cho-cpc-resources-tobechanged.

S702: The source base station receives the CHO cancel information, and sends handover request (Handoverrequest) information to the target base station.

Optionally, the handover request information may carry first indication information, to indicate the target base station to change the CHO configuration information.

S703: The target base station receives the handover request information, and sends CHO reconfiguration information to the source base station.

The CHO reconfiguration information includes ephemeris-related information of a changed satellite that provides coverage for the target cell. Optionally, the CHO reconfiguration information further includes effective time of the ephemeris-related information, or handover request acknowledgment information sent by the target base station to the source base station carries effective time, where the effective time is not included in the CHO reconfiguration information.

Specifically, after receiving the handover request information, the target base station generates the CHO reconfiguration information (which may be an RRC reconfiguration message generated by the candidate target cell), where the CHO reconfiguration information may be carried in the handover request acknowledgment (HandoverRequestACK) information and sent to the source base station.

For example, the second satellite is the changed satellite, the CHO reconfiguration information may carry the ephemeris-related information of the second satellite, and the CHO reconfiguration information may further carry the time at which the second satellite starts to cover the target cell (that is, the effective time), for example, t2. After receiving the CHO reconfiguration information, the terminal generates new CHO configuration information at the moment t2.

S704: The source base station receives the CHO reconfiguration information, and sends the CHO reconfiguration information to the terminal.

Specifically, the CHO reconfiguration information may be carried in the RRC reconfiguration information and sent by the source base station to the terminal. After receiving the CHO reconfiguration information, the terminal makes the CHO reconfiguration information effective at the effective time. The CHO reconfiguration information includes the ephemeris-related information of the changed satellite.

It should be noted that, if the CHO configuration information does not carry the effective time, and the effective time is carried in the handover request acknowledgment information, the source base station may send the CHO configuration information to the terminal when the changed satellite arrives (for example, at the effective time) or before the changed satellite arrives (where for example, it is ensured that time at which the terminal receives the CHO configuration information is very close to the effective time). Optionally, if the CHO configuration information carries the effective time, time at which the source base station sends the CHO configuration information may not be limited. If the target base station triggers generation of the CHO reconfiguration information after the satellite of the target cell changes, the effective time does not need to be considered, that is, time at which the terminal uses the CHO reconfiguration information is consistent with time at which the satellite covers the candidate target cell.

It should be noted that before S701, the synchronization method further includes the following steps.

S7001: The source base station sends, to the terminal, indication information of L3-free signaling handover, and information about time, for example, t-start, for making the L3-free signaling handover effective. Optionally, the indication information may be delivered in system information.

S7002: The terminal initiates a connection, and successfully accesses the source base station.

S7001 and S7002 are optional.

S7003: The source base station sends the CHO configuration information to the terminal. Optionally, the source base station may send the CHO configuration information only to a terminal located at an edge of the cell.

S7004: The terminal receives the CHO configuration information sent by the source base station.

It should be noted that after S704, the synchronization method further includes the foregoing step S206. Details are not described herein again.

In this embodiment of this application, the target base station triggers the change of the CHO configuration information, to generate the CHO reconfiguration information. The CHO reconfiguration information includes the ephemeris-related information of the changed satellite and includes the corresponding effective time, so that the terminal using the CHO reconfiguration information synchronizes with the changed satellite covering the candidate target cell.

FIG. 8 is a schematic flowchart of another synchronization method according to an embodiment of this application. Specific steps are as follows.

A source base station triggers a change of CHO configuration information before a satellite changes, and a target cell generates new CHO configuration information, where the CHO configuration information carries ephemeris-related information of a changed satellite. The source base station delivers CHO reconfiguration information to a terminal when the changed satellite arrives.

For example, a moment at which a first satellite starts to cover the target cell is t1, and a moment at which the first satellite ends coverage of the target cell is t-service1; and a moment at which a second satellite starts to cover the target cell is t2, and a moment at which the second satellite ends coverage of the target cell is t-service2.

The satellite of the target cell changes before t-service1. In this case, the source base station triggers the change of the CHO configuration information, requests a target base station to update the CHO configuration information, where the configuration information carries ephemeris-related information of the second satellite. Optionally, the CHO reconfiguration information may carry time at which the second satellite starts to cover the target cell, for example, t2. After receiving the CHO reconfiguration information, the terminal makes the new CHO configuration information effective at the moment t2. A specific signaling process may be as follows:

S801: The source base station sends handover request information to the target base station, where the handover request information includes indication information.

Optionally, when the satellite of the target cell is about to change, the source base station sends the handover request information to the target base station of the target cell, where the handover request information includes a conditional handover trigger value (CHO trigger value). For example, the conditional handover trigger value may be CHO-replace.

Specifically, the handover request information further includes second indication information, where the second indication information indicates the target base station to change the CHO configuration information, and also indicates that the CHO reconfiguration information carries the ephemeris-related information of the changed satellite that provides coverage for the target cell and carries effective time.

S802: The target base station receives the handover request message, and sends the CHO reconfiguration information to the source base station, where the CHO reconfiguration information includes the ephemeris-related information of the changed satellite that provides the coverage for the target cell.

Optionally, the CHO reconfiguration information further includes the effective time of the ephemeris-related information, or handover request acknowledgment information sent by the target base station to the source base station carries the effective time, where the effective time is not included in the CHO reconfiguration information.

Specifically, after receiving the handover request information, the target base station generates the CHO reconfiguration information, where the CHO reconfiguration information may be carried in the handover request acknowledgment (HandoverRequestACK) information and sent to the source base station.

For example, the second satellite is the changed satellite, the CHO reconfiguration information may carry the ephemeris-related information of the second satellite, and the CHO reconfiguration information may further carry the time at which the second satellite starts to cover the target cell, for example, t2. After receiving the CHO reconfiguration information, the terminal generates new CHO configuration information at the moment t2.

S803: The source base station receives the CHO reconfiguration information, and sends the CHO reconfiguration information to the terminal.

Specifically, the CHO configuration information may be carried in the RRC reconfiguration information and sent by the source base station to the terminal. After receiving the CHO reconfiguration information, the terminal makes the CHO reconfiguration information effective at the effective time. The CHO reconfiguration information includes the ephemeris-related information of the changed satellite.

It should be noted that, if the CHO configuration information does not carry the effective time, and the effective time is carried in the handover request acknowledgment information, the source base station may send the CHO configuration information to the terminal when the changed satellite arrives (for example, at the effective time) or before the changed satellite arrives (where for example, it is ensured that time at which the terminal receives the CHO configuration information is very close to the effective time). Optionally, if the CHO configuration information carries the effective time, time at which the source base station sends the CHO configuration information may not be limited. If the source base station triggers generation of the CHO reconfiguration information after the satellite of the target cell changes, the effective time does not need to be considered, that is, time at which the terminal uses the CHO reconfiguration information is consistent with time at which the satellite covers the candidate target cell.

It should be noted that before S801, the synchronization method further includes the following steps.

S8001: The source base station sends, to the terminal, indication information of L3-free signaling handover, and information about time, for example, t-start, for making the L3-free signaling handover effective. Optionally, the indication information may be delivered in system information.

S8002: The terminal initiates a connection, and successfully accesses the source base station.

The S8001 and S8002 are optional.

S8003: The source base station sends the CHO configuration information to the terminal. Optionally, the source base station may send the CHO configuration information only to a terminal located at an edge of the cell.

S8004: The terminal receives the CHO configuration information sent by the source base station.

It should be noted that after S804, the synchronization method further includes the foregoing step S206. Details are not described herein again.

In this embodiment of this application, the source base station triggers the change of the CHO configuration information, to indicate the target base station to generate the CHO reconfiguration information. The CHO reconfiguration information includes the ephemeris-related information of the changed satellite and includes the corresponding effective time, so that the terminal using the CHO reconfiguration information synchronizes with the changed satellite covering the candidate target cell.

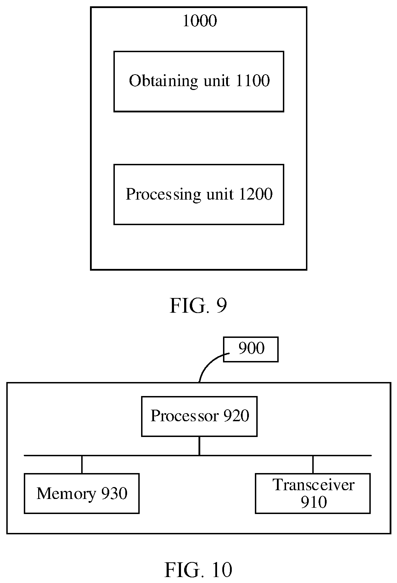

FIG. 9 is a diagram of a communication apparatus according to an embodiment of this application.

In some embodiments, the apparatus 1000 includes: a communication unit 1100, configured to receive first information, where the first information indicates a terminal to hand over to a first cell, and the first information includes a plurality of sets of ephemeris-related information corresponding to the first cell; and a processing unit 1200, configured to determine to hand over to the first cell and change to first ephemeris-related information corresponding to the first cell, where the first ephemeris-related information is one of the plurality of sets of ephemeris-related information. The processing unit 1200 is further configured to access the first cell based on the first ephemeris-related information.

Optionally, the first information further includes enabling time respectively corresponding to the plurality of sets of ephemeris-related information; and that the processing unit 1200 determines the first ephemeris-related information corresponding to the first cell includes: First enabling time corresponding to the first ephemeris-related information is equal to or less than time at which the processing unit 1200 determines to hand over to the first cell.

Optionally, the first information further includes a plurality of physical cell identifiers, and the physical cell identifiers are in one-to-one correspondence with the ephemeris-related information; and the processing unit 1200 is further configured to determine a first physical cell identifier corresponding to the first cell.

Optionally, the first information is conditional handover configuration information of the first cell, and the conditional handover configuration information includes an execution condition under which the terminal hands over to the first cell.

Optionally, when the execution condition of the first cell is met, the terminal skips accessing the first cell.

Optionally, the first information further includes first service stop time corresponding to the first ephemeris-related information; and when the execution condition is met and a time interval between a current moment and the first service stop time exceeds a first threshold, the terminal skips accessing the first cell; or when the execution condition is met and a time interval between a current moment and the first service stop time is less than or equal to a first threshold, the terminal accesses the first cell.

Optionally, the first information further includes first service stop time corresponding to the first ephemeris-related information; and when the execution condition is met and an interval between the first service stop time and the first enabling time exceeds a second threshold, the terminal skips accessing the first cell; or when the execution condition is met and an interval between the first service stop time and the first enabling time is less than or equal to a second threshold, the terminal accesses the first cell.

Optionally, when the execution condition is met and an interval between a current moment and the first enabling time exceeds a third threshold, the terminal skips accessing the first cell; or when the execution condition is met and an interval between a current moment and the first enabling time is less than or equal to a third threshold, the terminal accesses the first cell.

Optionally, the processing unit 1200 is further configured to start decision of the execution condition after the first enabling time.

An embodiment of this application further provides a communication apparatus, including: a communication unit, configured to receive first information, where the first information indicates a terminal to hand over to a first cell, and the first information includes an execution condition under which the terminal hands over to the first cell; and a processing unit, configured to determine that when the execution condition is met, the terminal determines, based on the first information, to skip accessing the first cell.

Optionally, the first information further includes first ephemeris-related information corresponding to the first cell and first service stop time corresponding to the first ephemeris-related information. When a time interval between a current moment and the first service stop time exceeds a first threshold, the terminal skips accessing the first cell.

Optionally, the first information further includes first ephemeris-related information corresponding to the first cell and first enabling time and first service stop time corresponding to the first ephemeris-related information. When an interval between the first service stop time and the first enabling time exceeds a second threshold, the terminal skips accessing the first cell.

Optionally, the first information further includes first ephemeris-related information corresponding to the first cell and first enabling time corresponding to the first ephemeris-related information. When an interval between a current moment and the first enabling time exceeds a third threshold, the terminal skips accessing the first cell.

An embodiment of this application further provides a communication apparatus, including: a communication unit, configured to send second information, where the second information identifies that first information or a resource configured for a terminal changes, where the communication unit is further configured to receive handover request information, where the handover request information indicates a target base station to reconfigure the first information; and the communication unit is further configured to send reconfigured first information, where the reconfigured first information includes first ephemeris-related information corresponding to a first cell and includes effective time; and a processing unit, configured to indicate the terminal to hand over to the first cell and enable the first ephemeris-related information at the effective time.

Optionally, the second information includes a cause value.

An embodiment of this application further provides a communication apparatus, including: a communication unit, configured to send handover request information, where the handover request information indicates a target base station to reconfigure first information, and reconfigured first information includes first ephemeris-related information corresponding to a first cell and includes effective time, where the communication unit is further configured to receive the reconfigured first information sent by the target base station; and a processing unit, configured to indicate a terminal to hand over to the first cell and enable the first ephemeris-related information at the effective time.

Optionally, the handover request information includes a conditional handover trigger value, and the conditional handover trigger value is used for triggering the first information or a resource configured by the terminal to change.

An embodiment of this application further provides a communication apparatus, including: a communication unit, configured to receive reconfigured first information, where the reconfigured first information includes first ephemeris-related information corresponding to a first cell and includes effective time; and a processing unit, configured to: based on the reconfigured first information, hand over to the first cell and enable the first ephemeris-related information at the effective time.

FIG. 10 is a block diagram of a communication apparatus 900 according to an embodiment of this application. As shown in the figure, the apparatus 900 includes at least one processor 920. The processor 920 is coupled to a memory, and is configured to execute instructions stored in the memory, to send a signal and/or receive a signal. Optionally, the apparatus 900 further includes a memory 930, configured to store the instructions. Optionally, the apparatus 900 further includes a transceiver 910, and the processor 920 controls the transceiver 910 to send a signal and/or receive a signal.

It should be understood that the foregoing processor 920 and the memory 930 may be combined into one processing apparatus, and the processor 920 is configured to execute program code stored in the memory 930 to implement the foregoing functions. During specific implementation, the memory 930 may alternatively be integrated into the processor 920, or independent of the processor 920.

It should be further understood that the transceiver 910 may include a transceiver (or referred to as a receiving machine) and a transmitter (or referred to as a transmitting machine). The transceiver may further include an antenna, and there may be one or more antennas. The transceiver 910 may be a communication interface or an interface circuit.

For example, the transceiver 910 in the apparatus 900 may be corresponding to the transceiver unit in the foregoing embodiment, and the processor 920 in the apparatus 900 may be corresponding to the processing unit in the foregoing embodiment. It should be understood that a specific process in which the transceiver and the processor perform the foregoing corresponding steps is described in detail in the foregoing method embodiments. For brevity, details are not described herein.

In an implementation process, steps in the foregoing methods can be implemented by using a hardware integrated logical circuit in the processor, or by using instructions in a form of software. The steps in the methods disclosed with reference to embodiments of this application may be directly performed and completed by a hardware processor, or may be performed and completed by using a combination of hardware in the processor and a software module. The software module may be located in a mature storage medium in the art, for example, a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. To avoid repetition, details are not described herein again.

It should be noted that, the processor in embodiments of this application may be an integrated circuit chip, and has a signal processing capability. In an implementation process, steps in the foregoing method embodiments can be implemented by using a hardware integrated logical circuit in the processor, or by using instructions in a form of software. The foregoing processor may be a general-purpose processor, a digital signal processor (digital signal processor, DSP), an application-specific integrated circuit (application-specific integrated circuit, ASIC), a field-programmable gate array (field-programmable gate array, FPGA) or another programmable logic device, a discrete gate or transistor logic device, or a discrete hardware component. The processor may implement or perform the methods, steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. The software module may be located in a mature storage medium in the art, for example, a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

It may be understood that the memory in this embodiment of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synch-link DRAM, SLDRAM), and a direct rambus dynamic random access memory (direct rambus RAM, DR RAM). It should be noted that the memory of the systems and methods described in this specification includes but is not limited to these and any memory of another proper type.

According to the communication method provided in embodiments of this application, this application further provides a computer program product. The computer program product stores computer program code. When the computer program code is run on a computer, the computer is caused to perform the communication method in this application.

According to the communication method provided in embodiments of this application, this application further provides a computer-readable medium. The computer-readable medium stores program code. When the program code is run on a computer, the computer is caused to perform the communication method in this application.

According to the communication method provided in embodiments of this application, this application further provides a system, including the foregoing apparatus or device.

All or some of the foregoing embodiments may be implemented by using software, hardware, firmware, or any combination thereof. When software is used to implement embodiments, all or some of embodiments may be implemented in a form of a computer program product. The computer program product includes one or more computer instructions. When the computer instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid state drive (solid state drive, SSD)), or the like.

The network side device and the terminal device in the foregoing apparatus embodiments correspond to the network side device or the terminal device in the method embodiments. A corresponding module or unit performs a corresponding step. For example, a communication unit (a transceiver) performs an obtaining step or a sending step in the method embodiments, and a step other than the sending step and the obtaining step may be performed by a processing unit (a processor). For a function of a specific unit, refer to a corresponding method embodiment. There may be one or more processors.

Terminologies such as "component", "module", and "system" used in this specification indicate computer-related entities, hardware, firmware, combinations of hardware and software, software, or software being executed. For example, a component may be, but is not limited to, a process running on a processor, a processor, an object, an executable file, an execution thread, a program, and/or a computer. As illustrated by using figures, both a compute device and an application running on the compute device may be components. One or more components may reside within a process and/or an execution thread, and a component may be located on one computer and/or distributed between two or more computers. In addition, these components may be executed from various computer-readable media that have various data structures stored therein. For example, the components may communicate by using a local and/or remote process and based on, for example, a signal having one or more data packets (for example, data from two components interacting with another component in a local system, a distributed system, and/or across a network such as the internet interacting with other systems by using the signal).

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes outside the scope of this application.

It may be clearly understood by a person skilled in the art that, for the purpose of convenient and brief description, for a detailed working process of the foregoing system, apparatuses, and units, reference may be made to a corresponding process in the foregoing method embodiments. Details are not described herein again.

In several embodiments provided in this application, it should be understood that the disclosed system, apparatuses, and methods may be implemented in other manners. For example, the foregoing described apparatus embodiments are merely examples. For example, the unit division is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, various functional units in embodiments of this application may be integrated into one processing unit, or each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, the part contributing to the conventional technology, or some of the technical solutions may be implemented in a form of a software product. The computer software product is stored in a storage medium, and includes several instructions for enabling a computer device (which may be a personal computer, a server, a network device, or the like) to perform all or some of the steps of the methods described in embodiments of this application. The foregoing storage medium includes any medium that can store program code, for example, a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving, by a terminal, first information, wherein the first information indicates the terminal to hand over to a first cell, and the first information comprises a plurality of sets of ephemeris-related information corresponding to the first cell;
determining, by the terminal, to hand over to the first cell and determining first ephemeris-related information corresponding to the first cell, wherein the first ephemeris-related information is one of the plurality of sets of ephemeris-related information; and
accessing, by the terminal, the first cell based on the first ephemeris-related information.

2. The communication method according to claim 1, wherein the first information further comprises enabling time respectively corresponding to the plurality of sets of ephemeris-related information; and
determining, by the terminal, the first ephemeris-related information corresponding to the first cell comprises: first enabling time corresponding to the first ephemeris-related information is equal to or later than time at which the terminal determines to hand over to the first cell.

3. The communication method according to claim 1 or 2, wherein the first information further comprises a plurality of physical cell identifiers, and the physical cell identifiers are in one-to-one correspondence with the ephemeris-related information; and
the terminal determines a first physical cell identifier corresponding to the first cell.

4. The communication method according to claim 1 or 2, wherein the first information is conditional handover configuration information of the first cell, and the conditional handover configuration information comprises an execution condition under which the terminal hands over to the first cell.

5. The communication method according to claim 4, wherein when the execution condition of the first cell is met, the terminal skips accessing the first cell.

6. The communication method according to claim 4, wherein the first information further comprises first service stop time corresponding to the first ephemeris-related information; and
when the execution condition is met and a time interval between a current moment and the first service stop time is less than a first threshold, the terminal skips accessing the first cell; or
when the execution condition is met and a time interval between a current moment and the first service stop time is greater than or equal to a first threshold, the terminal accesses the first cell.

7. The communication method according to claim 4, wherein the first information further comprises second service stop time of ephemeris-related information of the terminal in a current cell; and
when the execution condition is met and a time interval between a current moment and the second service stop time exceeds a second threshold, the terminal skips accessing the first cell; or
when the execution condition is met and a time interval between a current moment and the second service stop time is less than or equal to a second threshold, the terminal accesses the first cell.

8. The communication method according to claim 4, wherein the first information further comprises second service stop time of ephemeris-related information of the terminal in a current cell; and
when the execution condition is met and an interval between the second service stop time and the first enabling time exceeds a third threshold, the terminal skips accessing the first cell; or
when the execution condition is met and an interval between the second service stop time and the first enabling time is less than or equal to a third threshold, the terminal accesses the first cell.

9. The communication method according to claim 4, wherein
when the execution condition is met and an interval between a current moment and the first enabling time exceeds a fourth threshold, the terminal skips accessing the first cell; or
when the execution condition is met and an interval between a current moment and the first enabling time is less than or equal to a fourth threshold, the terminal accesses the first cell.

10. The communication method according to any one of claims 4 to 9, wherein
the terminal starts decision of the execution condition after the first enabling time.

11. A communication method, comprising:
receiving, by a terminal, first information, wherein the first information indicates the terminal to hand over to a first cell, the first information comprises an execution condition under which the terminal hands over to the first cell, and
the first information further comprises first ephemeris-related information corresponding to the first cell; and
determining, by the terminal, that the execution condition is met, and determining, by the terminal based on the first information, whether to access the first cell.

12. The communication method according to claim 11, wherein the first information further comprises first service stop time corresponding to the first ephemeris-related information; and
when a time interval between a current moment and the first service stop time is less than a first threshold, the terminal skips accessing the first cell; or
when a time interval between a current moment and the first service stop time is greater than or equal to a first threshold, the terminal accesses the first cell.

13. The communication method according to claim 11, wherein the first information further comprises second service stop time of ephemeris-related information of the terminal in a current cell; and
when a time interval between a current moment and the second service stop time exceeds a second threshold, the terminal skips accessing the first cell; or
when a time interval between a current moment and the second service stop time is less than or equal to a second threshold, the terminal accesses the first cell.

14. The communication method according to claim 11, wherein the first information further comprises first enabling time corresponding to the first ephemeris-related information and second service stop time of ephemeris-related information of the terminal in a current cell; and
when an interval between the second service stop time and the first enabling time exceeds a third threshold, the terminal skips accessing the first cell; or
when an interval between the second service stop time and the first enabling time is less than or equal to a third threshold, the terminal accesses the first cell.

15. The communication method according to claim 11, wherein the first information further comprises first enabling time corresponding to the first ephemeris-related information; and
when an interval between a current moment and the first enabling time exceeds a fourth threshold, the terminal skips accessing the first cell; or
when an interval between a current moment and the first enabling time is less than or equal to a fourth threshold, the terminal accesses the first cell.

16. A synchronization method, comprising:
sending, by a target base station, second information, wherein the second information identifies that first information or a resource configured for a terminal changes;
receiving, by the target base station, handover request information, wherein the handover request information indicates the target base station to reconfigure the first information; and
sending, by the target base station, reconfigured first information, wherein the reconfigured first information comprises first ephemeris-related information corresponding to the first cell and comprises effective time, and
the reconfigured first information indicates the terminal to hand over to the first cell and enable the first ephemeris-related information at the effective time.

17. The synchronization method according to claim 16, wherein the second information comprises a cause value.

18. A synchronization method, comprising:
sending, by a source base station, handover request information, wherein the handover request information indicates a target base station to reconfigure first information, and reconfigured first information comprises first ephemeris-related information corresponding to a first cell and comprises effective time; and
receiving, by the source base station, the reconfigured first information sent by the target base station, wherein
the reconfigured first information indicates a terminal to hand over to the first cell and enable the first ephemeris-related information at the effective time.

19. The synchronization method according to claim 18, wherein the handover request information comprises a conditional handover trigger value, and the conditional handover trigger value is used for triggering the first information or a resource configured by the terminal to change.

20. A synchronization method, comprising:
receiving, by a terminal, reconfigured first information, wherein the reconfigured first information comprises first ephemeris-related information corresponding to the first cell and comprises effective time, and
based on the reconfigured first information, handing over, by the terminal, to the first cell, and enabling the first ephemeris-related information at the effective time.

21. A communication apparatus, configured to implement the communication method according to any one of claims 1 to 10, or configured to implement the communication method according to any one of claims 11 to 15.

22. A communication apparatus, configured to implement the synchronization method according to claim 16 or 17, or configured to implement the synchronization method according to claim 18 or 19, or configured to implement the synchronization method according to claim 20.

23. A communication apparatus, comprising a processor and a memory, wherein the memory is configured to store a computer program or instructions, and the processor is configured to execute the computer program or the instructions in the memory, to perform the method according to any one of claims 1 to 10, or perform the method according to any one of claims 11 to 15.

24. A communication apparatus, comprising a processor and a memory, wherein the memory is configured to store a computer program or instructions, and the processor is configured to execute the computer program or the instructions in the memory, to perform the method according to claim 16 or 17, or perform the method according to claim 18 or 19, or perform the method according to claim 20.

25. A computer-readable storage medium, wherein the computer-readable storage medium stores a computer program, and when the computer program is run on a computer, the computer is caused to perform the method according to any one of claims 1 to 10, or the computer is caused to perform the method according to any one of claims 11 to 15.

26. A computer-readable storage medium, wherein the computer-readable storage medium stores a computer program, and when the computer program is run on a computer, the computer is caused to perform the method according to claim 16 or 17, or the computer is caused to perform the method according to claim 18 or 19, or the computer is caused to perform the method according to claim 20.

27. A computer program product, wherein the computer program product comprises instructions used for performing the method according to any one of claims 1 to 10, or the computer program product comprises instructions used for performing the method according to any one of claims 11 to 15.

28. A computer program product, wherein the computer program product comprises instructions used for performing the method according to claim 16 or 17, or the computer program product comprises instructions used for performing the method according to claim 18 or 19, or the computer program product comprises instructions used for performing the method according to claim 20.
